(19) Europäisches Patentamt
European Patent Office
Office européen des brevets

(11) **EP 1 097 621 A2**

(12) **EUROPÄISCHE PATENTANMELDUNG**

(43) Veröffentlichungstag:
**09.05.2001 Patentblatt 2001/19**

(51) Int. Cl.$^7$: **A01B 33/10**

(21) Anmeldenummer: **00123803.9**

(22) Anmeldetag: **02.11.2000**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **03.11.1999 DE 19952874**

(71) Anmelder: **Hofmann, Hans
D-89233 Neu-Ulm (DE)**

(72) Erfinder: **Hofmann, Hans
D-89233 Neu-Ulm (DE)**

(74) Vertreter: **Weber, Gerhard
Patentanwalt
Postfach 2029
89010 Ulm (DE)**

(54) **Fahrbares Bodenbearbeitungsgerät**

(57) Für ein Bodenbearbeitungsgerät, insbesondere nach Art einer Kreiselegge werden Anordnungen mit verschiedenen Werkzeuganordnungen beschrieben, welche durch geneigte in Bewegungsrichtung weisende Arbeitskanten (AK1,HK) besonders vorteilhafte Bearbeitungsmöglichkeiten bieten.

Fig. 1

EP 1 097 621 A2

**Beschreibung**

Die Erfindung betrifft ein fahrbares Bodenbearbeitungsgerät, insbesondere nach Art einer Kreiselegge.

Kreiseleggen weisen typischerweise eine Mehrzahl von quer zur Fahrtrichtung beabstandeten Kreiseln auf, welche jeweils um eine aufrechte Achse rotieren. Die Kreisel sind synchron angetrieben, wobei sich benachbarte Kreisel im Regelfall gegensinnig drehen und über eine gemeinsame Antriebseinrichtung von einer Zugmaschine angetrieben werden.

Die Kreisel weisen jeweils einen Werkzeugträger und von diesem nach unten weisende und in die zu bearbeitende Bodenfläche eingreifende Zinken als Arbeitswerkzeuge auf. Die in Bewegungsrichtung weisenden Arbeitskanten der Zinken sind häufig in einem spitzen Winkel gegen die Vertikale geneigt.

Aus der DE 33 18 639 A1 ist beispielsweise eine derartige Bodenbearbeitungsmaschine bekannt, bei welcher an Kreiseln Zinkenhalter angeordnet sind, in welche stabförmige Zinken eingesteckt und durch Splinte gesichert sind. Die Zinken können durch gegen die horizontale Kreiselebene geneigte Steckrichtungen der Zinkenhalter leicht nachlaufend ausgerichtet sein und in Steckrichtung zum Ausgleich von Abnutzung nachstellbar sein.

Die DE 7 820 611 U1 beschreibt eine derartige Bodenbearbeitungsmaschine, bei welcher nach unten gerichtete Zinken lösbar in zwei um 180° verdrehten Positionen an Flanschen der Kreisel befestigt sind, so daß je nach Montagerichtung eine von zwei entgegengesetzt ausgerichteten Zinkenkanten als Arbeitskante wirkt. Die Zinken verlaufen überwiegend mit parallelen vertikalen Kanten und sind an ihrem unteren Ende spitz zulaufend mit einem steilen voreilenden und einem stärker geneigten schleppenden Abschnitt. Anstelle des Ummontierens der Zinken zur Änderung der Arbeitswirkung kann auch vorgesehen sein, die Drehrichtung der Kreisel durch ein umschaltbares Getriebe zu wechseln.

Eine Kreiselegge mit richtungsumschaltbarem Getriebe und steilen Arbeitskanten der Zinken ist auch aus der FR 26 03 153 bekannt.

Der vorliegenden Erfindung liegt die Aufgabe zugrunde, ein Bodenbearbeitungsgerät, insbesondere nach Art einer Kreiselegge anzugeben, welches mit kostengünstigen Arbeitswerkzeugen weiter verbesserte Einsatzmöglichkeiten aufweist.

Die Erfindung ist im Patentanspruch 1 beschrieben. Die abhängigen Ansprüche enthalten vorteilhafte Ausgestaltungen und Weiterbildungen der Erfindung.

Für das erfindungsgemäße Bodenbearbeitungsgerät sind die Neigungen der Arbeitskanten und deren weite vertikale Erstreckung von Bedeutung. Es zeigt sich, daß die Neigung der Arbeitskante besonders kritisch für Funktionsweisen ist, welche über die bei Kreiseleggen im Vordergrund stehende übliche Krümelung des Bodens hinaus gehen. Dabei erweist es sich als wichtig, daß die Neigung der Arbeitskanten sich über die Bodenoberfläche hinaus erstreckt. Die Arbeitskanten nehmen hierfür vorteilhafterweise wenigstens 80 % der außerhalb der Werkzeugaufnahmen liegenden Abschnitte der Werkzeuge in deren vertikaler Erstreckung ein.

Für die Entfernung von querwurzelndem Unkraut wie beispielsweise Quecken ist eine mittlere Neigung der Arbeitskante zwischen 15° und 30°, insbesondere zwischen 20° und 25° mit einem in Bewegungsrichtung voreilenden unteren Kantenende (Ausrichtung auf Griff, ziehend) günstig, welches im Boden die Querausläufer der Unkrautwurzeln untergreift und diese entlang der geneigten Arbeitskante nach oben zieht. Durch die weit nach oben reichende schräge Arbeitskante werden die Wurzeln entlang der Kante bis über den Boden hinaus gezogen und können dort vom Werkzeug abfallen, wogegen bei steilem oder teilweise auch vertikalem Verlauf der Arbeitskante im Boden der Zieheffekt nach oben nicht auftritt und derartige Wurzeln das Arbeitswerkzeug zusetzen und schwergängig machen würden.

Eine Neigung der Arbeitskante in einem Winkelbereich von 15° bis 30° in Gegenrichtung, das heißt mit in Bewegungsrichtung nacheilendem, schleppendem, unteren Ende der Arbeitskante ist zur allgemeinen Bodenlockerung günstig. Ausrichtungen von Arbeitskanten in diesem Bereich sind an sich, z. B. aus der eingangs genannten FR 26 03 153 bekannt.

Eine vorteilhafte Werkzeugform sieht hierzu einen Werkzeugaufbau mit einem Befestigungsabschnitt und einem Arbeitsabschnitt vor, wobei der Befestigungsabschnitt eine Werkzeugbefestigung in zwei vertikal, insbesondere um 180° verdrehten Montagepositionen erlaubt und der Arbeitsabschnitt zwei parallele Arbeitskanten aufweist, von welchen je nach Montageposition eine in Bewegungsrichtung zeigt und z. B. eine der vorgenannten Bearbeitungsfunktionen bewerkstelligt.

Eine stärkere Neigung der Arbeitskante gegen die Vertikale in einem Bereich zwischen 30° und 60°, insbesondere zwischen 40° und 60°, ermöglicht bei nachgeschleppter Ausrichtung der Arbeitskante mit nacheilendem unterem Ende beispielsweise die Einarbeitung von bodenlockerndem Stroh und/oder Zerkleinern von Erdklumpen und/oder eine vorteilhafte geringe Saatbettrückverfestigung, wogegen steilere schleppende Kanten oder erst im Boden flacher werdende Arbeitskanten auf dem Boden liegende Klumpen oder Stroh ohne den beschriebenen Arbeitseffekt beiseite schieben.

Dies kann durch unterschiedliche Werkzeuge mit verschiedener Arbeitskantenausrichtung erreicht werden, welche durch steckbare Befestigung einfach austauschbar sind. In anderer Ausführung kann wiederum in günstiger Weise mit einer steileren Arbeitskante in vorauseilender Ausrichtung in einem gemeinsamen Werkzeug mit zwei Montagepositionen kombiniert sein, wobei sich in diesem Fall das Werkzeug nach unten verjüngt.

In anderer Ausführung können die Arbeitskanten im Werkzeug untereinander parallel verlaufen und gegen die Ausrichtung des Befestigungsabschnitts um einen internen Winkel z. B. 35° geneigt sein und der Befestigungsabschnitt nach Art der DE 33 18 639 um einen Befestigungswinkel z. B. 10° gegen die Kreiselebene geneigt sein. Je nach Montagerichtung der Werkzeuge ergibt sich dann eine Neigung der Arbeitskante von z. B. 35° - 100 = 25° in voreilender, greifender Ausrichtung und 35° + 10° = 45° in schleppender Ausrichtung.

Bei geneigter Ausrichtung des Befestigungsabschnitts kann eine Arbeitsweise mit steiler schleppender Kante durch ein separates kostengünstiges Werkzeug in gerader Stabausführung eingestellt werden.

Die Arbeitskante eines Arbeitswerkzeugs kann gemäß einer bevorzugten ersten einfachen Ausführungsform über den gesamten Verlauf einen im wesentlichen gleichbleibenden Neigungswinkel gegen die Vertikale aufweisen. Eine andere vorteilhafte Ausführungsform sieht einen im Verlauf der Arbeitskante veränderlichen, insbesondere von oben nach unten sich vergrößernden Neigungswinkel vor, bei welchem ein über die Erstreckung der Arbeitskante gemittelter Neigungswinkel innerhalb des angegebenen Bereichs liegt.

Vorteilhafterweise sind die Werkzeuge lösbar an dem Werkzeugträger befestigt, wobei insbesondere eine schraubenlose Steckverbindung mit einem einfach zu lösendem Sicherungselement günstig ist. Eine solche schnell lösbare Verbindung ist auch zum Auswechseln eines beschädigten Werkzeugs von besonderem Vorteil. Bevorzugt ist eine Ausführung des Werkzeugträgers als auf verschiedene der nicht genormten Kreiselsysteme abgestimmter Adapter mit einheitlicher Werkzeugaufnahme für unterschiedliche Arbeitswerkzeuge.

Die Werkzeuge können neben bekannten Formen als profilierte Bleche insbesondere auch vorteilhafterweise aus Flachstahl mit einer Materialdicke zwischen 5 mm und 20 mm, insbesondere zwischen 8 mm und 15 mm hergestellt sein, was besonders vorteilhafte Steckbefestigungen in Aufnahmen des Werkzeugträgers erlaubt und kostengünstig in der Herstellung ist bei gleichzeitig hoher Werkzeugstabilität. Die Arbeitskanten können, insbesondere zum Ausreißen von Wurzeln und/oder zur Saatbettrückverfestigung stumpf ausgeführt oder auch verbreitert sein oder insbesondere zur Bodenlockerung für geringeren Arbeitswiderstand und zur Vermeidung des Zusetzens auch in Bewegungsrichtung zugespitzt sein.

Die Werkzeuge können in einer ersten günstigen Ausführungsform im wesentlichen eben ausgeführt und mit vertikaler Werkzeugebene montiert sein, wobei die Werkzeugebene tangential zum Bewegungskreis der Werkzeugaufnahme liegen oder in anderer Ausführungsform um einen Freiwinkel aus der Tangentialrichtung gedreht sein kann. Bei der letztgenannten Ausführung mit Freiwinkel ist ein vorauseilendes unteres Arbeitskantenende radial weiter außen liegend und ein geschleppt nacheilendes Ende radial nach innen versetzt, was für die Saatbettnachverfestigung vorteilhaft ist. Eine einem zur Drehachse koaxial liegenden fiktiven Zylindermantel angeformte oder angenäherte Krümmung oder Umbiegung der Werkzeuge kann eine weitgehend tangentiale Ausrichtung flacher Werkzeuge auch bei größerem Neigungswinkel der Arbeitskante erzielen. Für entgegengesetzt drehende Kreisel sind dann unterschiedliche spiegelsymmetrische Werkzeuge vorgesehen.

Die Erfindung ist nachfolgend anhand bevorzugter Ausführungsbeispiele unter Bezugnahmen auf die Abbildungen noch eingehend veranschaulicht. Dabei zeigt

Fig. 1       eine insbesondere zur Queckenbeseitigung geeignete Werkzeuganordnung

Fig. 2       eine Anordnung mit gegenüber Fig. 1 gedrehtem Werkzeug

Fig. 3       eine Werkzeuganordnung mit stärker geneigter Schleppkante

Fig. 4       eine beidseitig mit unterschiedlich geneigten Arbeitskanten verwendbare Werkzeuganordnung

Fig. 5,6     eine Anordnung mit geneigter Werkzeugaufnahme

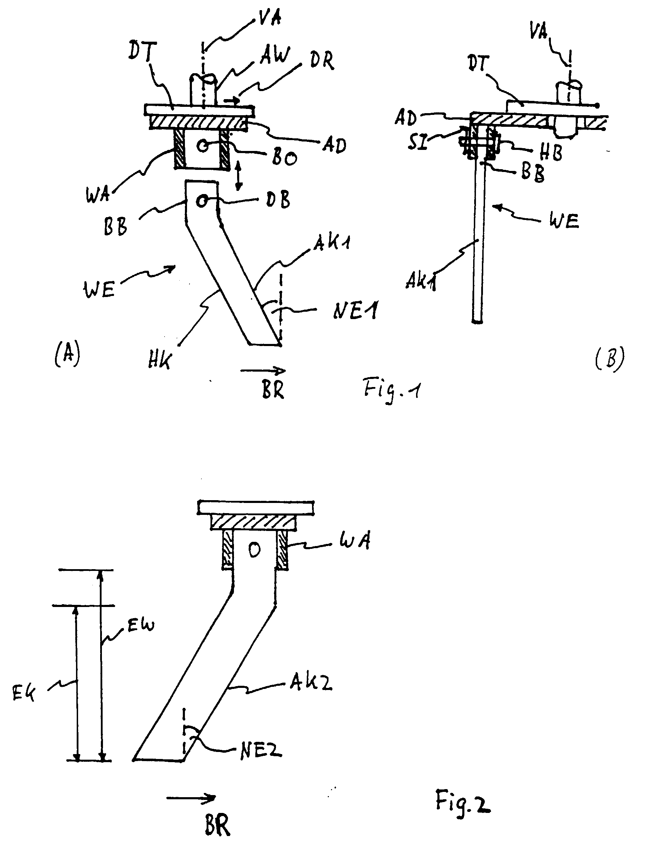

Bei der in Fig. 1 skizzierten Werkzeuganordnung ist an einem um eine aufrechte Achse VA drehbaren Kreiselteller DT, welcher über eine Antriebswelle AW in Drehrichtung DR antreibbar ist, ein Werkzeugadapter AD befestigt, welcher insbesondere zwei zur Achse VA achsialsymmetrisch angeordnete und ausgerichtete Werkzeugaufnahmen WA aufweisen kann, befestigt. Die Werkzeugaufnahmen sind als nach unten offene Steckhülsen, beispielsweise Vierkant-Rohrabschnitte mit einer Querbohrung BO ausgeführt. Ein Arbeitswerkzeug WE weist einen Befestigungsabschnitt BB auf, welcher verdrehsicher in die Werkzeugaufnahme WA mit geringem Spiel einsetzbar ist, In dem Befestigungsabschnitt BB des Werkzeugs ist eine Öffnung DB vorgesehen, welche in eingesteckter Werkzeugposition mit der Bohrung BO fluchtet. Ein durch Bohrung BO und Öffnung DB durchgesteckter und mittels einer Sicherungsfeder SI oder dgl. gegen Ausziehen gesicherter Bolzen HB hält das Werkzeug ausziehsicher in der Werkzeugaufnahme und stabilisiert dieses durch enge Umschließung und Abstützung gegen Verwindungs- und/oder Verkippungskräfte im Betrieb. Nach Entsichern und Ausdrücken des Bolzens kann das Werkzeug einfach wieder aus der Werkzeugaufnahme entnommen werden. Einsteck- und Entnahmerichtung sind durch einen Doppelpfeil angedeutet (Fig. 1 (A)).

Der nach unten ragende Arbeitsabschnitt des Arbeitswerkzeugs zeigt eine in Bewegungsrichtung BR weisende Arbeitskante AK1, welche im skizzierten Beispiel gerade verläuft mit einem Neigungswinkel NE1 gegen die Vertikale. Der Neigungswinkel liegt vorteilhafterweise zwischen 15° und 30°, bevorzugt wie im skizzierten Beispiel zwischen 20° und 25°. Das untere Ende der Arbeitskante liegt in Bewegungsrichtung vorauseilend und taucht in die zu bearbeitende Akkerfläche ein. Das vorauseilende Ende der Arbeitskante untergreift bei seiner kreisförmigen Bewegung um die Drehachse VA flache Wurzeln und Seitenausläufer von Feldunkraut und zieht diese bei Weiterbewegung der Arbeitskante an dieser entlang nach oben. Die Arbeitskante AK1 ist für diesen Zweck vorzugsweise ohne schneidende Kanten, welche diese Querwurzeln u. U. lediglich durchtrennen und nicht ausziehen.

Das Werkzeug WE ist vorteilhafterweise aus Flachstahl hergestellt und eben und dadurch kostengünstig und stabil. Die Frontansicht in Fig. 1 (B) veranschaulicht dies und zeigt eine Ausrichtung der Werkzeugebene tangential zur Kreisbewegung um die Drehachse VA. Alternativ kann auch eine Verdrehung der vertikalen Werkzeugebene um einen Freiwinkel gegen die Tangentialrichtung vorteilhaft sein. Das Werkzeug kann auch in sich gekrümmt oder abgewinkelt sein in der Art, daß es einem um die Drehachse VA gedachten Kreiszylinder folgt oder angenähert ist.

Das in Fig. 1 skizzierte Werkzeug zeigt eine zur Arbeitskante AK1 parallele Hinterkante. Bei um 180° versetzter Montage des Werkzeugs in der Aufnahme WA kann die in Fig. 1 als Hinterkante HK bezeichnete Kante wie in Fig. 2 skizziert nunmehr in Bewegungsrichtung BR weisen und als um den Neigungswinkel NE2 gegen die Vertikale mit nacheilendem Kantenende schleppende Arbeitskante AK2 beispielsweise zur Bodenlockerung eingesetzt sein. Bei vorausgesetzt parallelen Kanten ist NE2 = NE1 . Bei nichtparallelen Kanten AK1 und AK2, insbesondere bei Verjüngung des Werkzeugs nach unten, kann auch eine einzeln optimierte Anpassung der Arbeitskantenausrichtung auf die jeweilige Bearbeitungsfunktion erfolgen.

In Fig. 2 ist mit dem Maß EW die vertikale Erstreckung des außerhalb der Werkzeugaufnahme WA liegenden Abschnitts des Werkzeugs bezeichnet und mit EK der von der gegen die Vertikale geneigten Arbeitskante AK2 eingenommene Anteil dieses Abschnitts, wobei vorteilhafterweise EK wenigstens 0,8 EW beträgt.

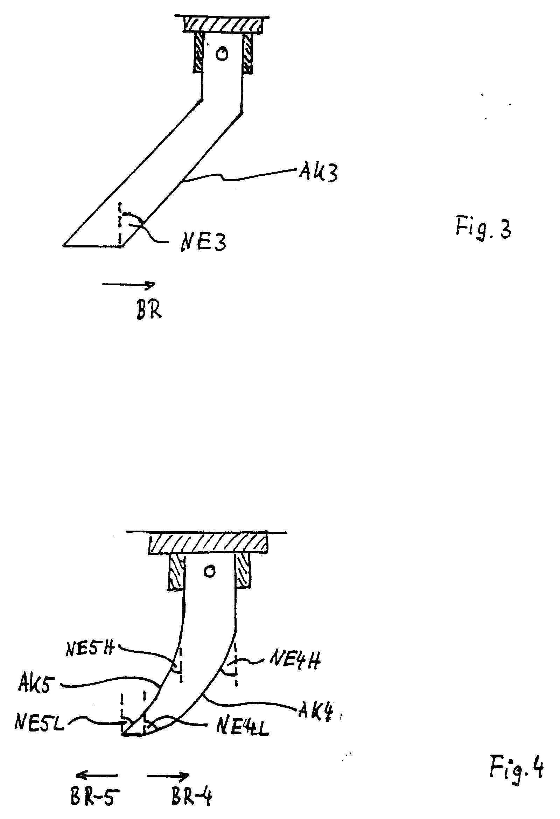

Das in Fig. 3 skizzierte Werkzeug ist dem in Fig. 1 und Fig. 2 skizzierten in der Form ähnlich, zeigt aber eine deutlich stärkere Neigung NE2 der geraden Arbeitskante AK3 gegen die Vertikale. Der größere Neigungswinkel mit nacheilendem unterem Kantenende ist insbesondere vorteilhaft für

a) Einarbeitung faseriger bodenlockernder Teile wie Stroh in den Boden, wobei diese Teile von der geschleppten Kante an und in den Boden gedrückt werden.

b) Zerkleinern von Erdklumpen, welche in dem Winkel zwischen Arbeitskante und Bodenfläche gedrückt und von der Kante zerteilt werden oder unter dem Kantendruck zerfallen.

c) Verdichtung eines Saatbetts durch Niederdrükken von Oberflächenbereichen.

In Fig. 4 ist ein Werkzeug skizziert, bei welchem zwei gegenüberliegende Kanten als ungleich gekrümmte Arbeitskanten AK4 und AK5 ein sich nach unten verjüngendes Werkzeug begrenzen. Die in Arbeitsrichtung BR-4 vornliegende Arbeitskante AK4 kann mit einem anfänglichen Neigungswinkel NE4H gestuft oder vorzugsweise allmählich zunehmenden Neigung bis zu einem abschließenden Neigungswinkel NE4L am unteren Ende des Werkzeugs und einem über den Kantenverlauf gemittelten Neigungswinkel zwischen 30° und 60° insbesondere die zu dem in Fig. 3 skizzierten Werkzeug geschilderten Bearbeitungsfunktionen übernehmen. Der größere Neigungswinkel NE4L kann diese Bearbeitungsfunktionen begünstigen.

Nach um 180° gedrehtem Einsatz des Werkzeugs in die Werkzeugaufnahme oder, soweit in dem Gerät vorgesehen, Umschaltung der Drehrichtung weist die Arbeitskante AK5 in Bewegungsrichtung BR-5 nach vorn mit vorauseilendem unterem Arbeitskantenende und einem zwischen anfänglichem oberem Neigungswinkel NE5H und abschließendem unterem Neigungswinkel NE5L gemitteltem Neigungswinkel zwischen 15° und 30° gegen die Vertikale. Diese Arbeitskante AK5 kann dann insbesondere die Funktionen der zu Fig. 1 erläuterten Arbeitskante AK1 erfüllen.

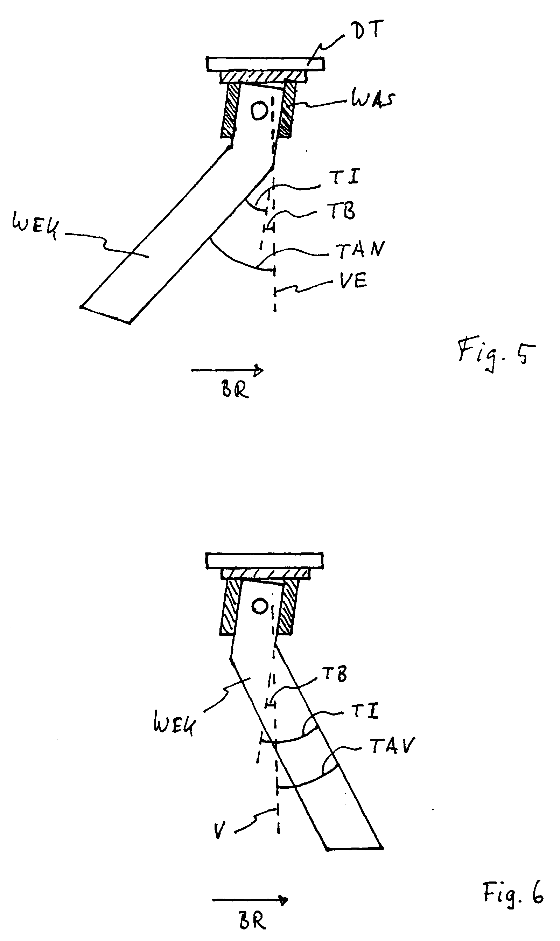

Bei der in Fig. 5 skizzierten Anordnung ist die Werkzeugaufnahme WAS gegen den horizontalen Drehteller DT geneigt, so daß die Einsteckrichtung des Werkzeugs WEK um einen Befestigungswinkel TB, z. B. TB = 10° gegen die Vertikale V geneigt ist. Das Werkzeug WEK besitzt zwei parallele Arbeitskanten AKK1, AKK2, welche um einen internen Winkel TI, z. B. TI = 35° gegen die Einsteckrichtung geneigt sind. In der in Fig. 5 skizzierten Montageposition des Werkzeugs WEK in der Aufnahme WAS ergibt sich dann für die schleppende Arbeitskante AKK1 ein Arbeitswinkel TAN = TB + TI = 45°.

In der um 180° um die Einsteckrichtung gedrehten Montageposition des Werkzeugs WEK, wie in Fig. 6 skizziert, ergibt sich für die ziehende Arbeitskante AKK2 ein Arbeitswinkel TAV = TI - TB = 25°.

Für sich nach unten verjüngende Werkzeuge gelten die Ausführungen entsprechend. Ein in die Aufnahme WAS eingestecktes stabförmig gerades Werkzeug zeigt dann einen Arbeitswinkel gleich TI.

Die Arbeitskanten, insbesondere die Arbeitskanten mit in Bewegungsrichtung voreilendem unterem Ende gehen vorzugsweise gerundet in den Befestigungsbereich des Werkzeugs über, um Belastungsspitzen des Materials zu vermeiden oder niedrig zu halten.

Die vorstehend und in den Ansprüchen angegebenen oder den Abbildungen entnehmbaren Merkmale sind sowohl einzeln als auch in verschiedenen Kombinationen vorteilhaft realisierbar. Die Erfindung ist nicht auf die verschiedenen Ausführungsbeispiele beschränkt, sondern im Rahmen fachmännischen Könnens auf mancherlei Weise abwandelbar.

**Patentansprüche**

1.  Fahrbares Bodenbearbeitungsgerät, insbesondere Kreiselegge, mit mehreren quer zur Fahrtrichtung voneinander beabstandet angeordneten und um aufrechte Wellen rotierenden Kreiseln, welche jeweils von einem mit den Wellen rotierendem Werkzeugträger aus Werkzeugaufnahmen nach unten abstehende, in den Boden eingreifende Arbeitswerkzeuge tragen, die eine in Bewegungsrichtung weisende Arbeitskante aufweisen, wobei das Gerät zwischen einer ersten Einstellung mit voreilender geneigter Arbeitskante und einer zweiten Einstellung mit nacheilend geneigter Arbeitskante umstellbar ist, dadurch gekennzeichnet,

    a) daß die geneigten Arbeitskanten wenigstens 80 % der vertikalen Erstreckung der Werkzeuge außerhalb der Werkzeugaufnahmen einnehmen,

    b) daß in der ersten Einstellung die mittlere Neigung der voreilenden (ziehenden) Arbeitskante zwischen 15° und 30°, insbesondere zwischen 20° und 25° gegen die Vertikale beträgt, und/oder

    c) daß in der zweiten Einstellung die mittlere Neigung der nacheilenden (schleppenden) Arbeitskante zwischen 30° und 60°, insbesondere zwischen 40° und 60° gegen die Vertikale beträgt.

2.  Gerät nach Anspruch 1, dadurch gekennzeichnet, daß die Arbeitswerkzeuge lösbar an den Träger befestigt sind.

3.  Gerät nach Anspruch 2, dadurch gekennzeichnet, daß die Arbeitswerkzeuge mit einem Befestigungsabschnitt in Werkzeugaufnahmen der Werkzeugträger eingesteckt sind.

4.  Gerät nach Anspruch 2 oder Anspruch 3, dadurch gekennzeichnet, daß die Werkzeuge in wenigstens zwei verschiedenen Ausrichtungen an dem Träger befestigbar sind.

5.  Gerät nach einem der Ansprüche 1 bis 4, dadurch gekennzeichnet, daß die Werkzeuge parallele Vorder- und Hinterkanten ausweisen.

6.  Gerät nach einem der Ansprüche 1 bis 4, dadurch gekennzeichnet, daß sich die Werkzeuge nach unten verjüngen.

7.  Gerät nach einem der Ansprüche 1 bis 6, dadurch gekennzeichnet, daß die Werkzeuge aus Flachstahl hergestellt sind.

Fig. 1

Fig. 2

Fig. 3

Fig. 4

Fig. 5

Fig. 6